**Europäisches Patentamt**

**European Patent Office**

**Office européen des brevets**

(11) Veröffentlichungsnummer : **0 358 899 B1**

(12) **EUROPÄISCHE PATENTSCHRIFT**

(45) Veröffentlichungstag der Patentschrift :
06.05.92 Patentblatt 92/19

(51) Int. Cl.$^5$ : **F16K 47/10, F16K 15/18, F16K 15/14**

(21) Anmeldenummer : 89113664.0

(22) Anmeldetag : 25.07.89

(54) **Drosselrückschlagventil.**

(30) Priorität : 16.09.88 DE 3831554

(43) Veröffentlichungstag der Anmeldung :
21.03.90 Patentblatt 90/12

(45) Bekanntmachung des Hinweises auf die
Patenterteilung :
06.05.92 Patentblatt 92/19

(84) Benannte Vertragsstaaten :
AT CH DE FR GB IT LI NL SE

(56) Entgegenhaltungen :
EP-A- 0 061 650
FR-A- 1 580 794
FR-A- 2 599 110
GB-A- 923 213
US-A- 2 630 920
Katalog Steuerungstechnik, Reg.10 Blatt 1
und 2 der Fa. WABCO Westinghouse vom
Dezember 1975

(73) Patentinhaber : **MANNESMANN REXROTH
PNEUMATIK GMBH
Bartweg 13, Postfach 91 12 70
W-3000 Hannover 91 (DE)**

(72) Erfinder : **Liesenhoff, Thomas
Kommandanturstrasse 12
W-3000 Hannover 1 (DE)**
Erfinder : **Meyer, Hans-Friedrich
Brauereiweg 6
W-3007 Gehrden (DE)**
Erfinder : **Schmitz, Manfred
Magnusstrasse 4
W-3008 Garbsen 4 (DE)**
Erfinder : **Meyer, Ernst-August
Auf dem Kamp 18
W-3201 Algermissen 5 (DE)**
Erfinder : **Möller, Rudolf
Knüllweg 15 c
W-3007 Gehrden (DE)**

(74) Vertreter : **Flaig, Siegfried
c/o Mannesmann AG Abteilung TP Postfach
5501
W-4000 Düsseldorf 1 (DE)**

## Beschreibung

Die Erfindung betrifft ein Drosselrückschlagventil gemäß dem Oberbegriff des Patentanspruchs 1.

Ein derartiges Drosselrückschlagventil ist aus dem Katalog Steuerungstechnik, Reg. 10 Blatt 1 und Blatt 2 der Fa. WABCO Westinghouse vom Dezember 1975 unter der Bezeichnung "Europa-Drosselrückschlagventil" bekannt.

Dieses Drosselrückschlagventil weist ein auf einem hülsenförmigen Träger angeordnetes ringförmiges Dichtelement mit einer umlaufenden Dichtlippe auf, die dichtend an der Wand einer Gehäusebohrung anliegt und mit dieser ein vom Druckmittel in die Offenstellung bringbares Rückschlagventil bildet, das in dem von der äußeren Mantelfläche des hülsenförmigen Trägers und der Innenwandung der Gehäusebohrung gebildeten Strömungsweg angeordnet ist. Dieser als Ringspalt ausgebildete Strömungsweg verbindet eine mit einem Druckmitteleingang versehene Druckmitteleingangskammer mit einer einen Druckmittelausgang aufweisenden Druckmittelausgangskammer. Diese beiden Kammern sind darüber hinaus auch über die Innenbohrung des hülsenförmigen Trägers miteinander verbunden.

In die Innenbohrung des hülsenförmigen Trägers taucht ein im wesentlichen konisch ausgebildetes Teil eines im Ventilgehäuse um seine Längsachse drehbaren Stellgliedes ein. Der konische Teil des Stellgliedes und die der Mantelfläche des konischen Teiles gegenüberliegende Innenwand des hülsenförmigen Trägers begrenzen also einen weiteren Ringspalt, über welchen die Druckmittelausgangskammer ständig mit der Druckmitteleingangskammer verbunden ist. Das Stellglied ist auf seiner dem konischen Teil abgewandten Seite mit einem Gewinde versehen, welches mit einem Gegengewinde in der im Ventilgehäuse vorgesehenen Führung für das Stellglied zusammenwirkt.

Die vom konischen Teil des Stellgliedes und der Innenwand des hülsenförmigen Trägers gebildete Drossel ist durch Drehen des Stellgliedes um seine Längsachse und somit durch eine durch das Gewinde bewirkte Bewegung des Stellgliedes in Richtung seiner Längsachse in ihrem Durchlaßquerschnitt veränderbar.

Dieses bekannte Drosselrückschlagventil setzt sich aus relativ vielen Einzelteilen zusammen, die einen erheblichen Montageaufwand erfordern.

Der Erfindung liegt die Aufgabe zugrunde, ein Drosselrückschlagventil der eingangs erwähnten Art zu schaffen, welches einen nur geringen Bauteileund Montageaufwand erfordert.

Diese Aufgabe wird durch die im Patentanspruch 1 angegebene Erfindung gelöst. Weiterbildungen und vorteilhafte Ausgestaltungen der Erfindung sind in den Unteransprüchen angegeben.

Die Erfindung bietet insbesondere den Vorteil, durch die Minimierung des Bauteileaufwandes den Montage aufwand des erfindungsgemäßen Drosselrückschlagventils erheblich zu reduzieren und die Herstellung der Bauteile wesentlich zu vereinfachen. Trotz des reduzierten Bauteileaufwandes wird die gleiche sichere Funktion wie bei dem vorbekannten Drosselrückschlagventil erzielt.

Anhand der Zeichnung werden nachstehend zwei Ausführungsbeispiele der Erfindung näher erläutert. Es zeigen:

**Fig. 1** ein Drosselrückschlagventil mit einer Nutringdichtung als Ventilkörper, wobei die Nutringdichtung mit in der Dichtfläche einer die Nutringdichtung aufnehmenden Gehäusebohrung angeordneten Schlitzen eine Drossel mit veränderbarem Durchlaßquerschnitt bildet;

**Fig. 2** eine Ansicht der mit Schlitzen versehenen Dichtfläche mit Nutringdichtung gemäß dem Schnitt A-A und

**Fig. 3** ein Drosselrückschlagventil mit einem topfförmig ausgebildeten Dichtelement, welches mit seiner äußeren Mantelfläche den Druckmitteleingang teilweise abdeckt.

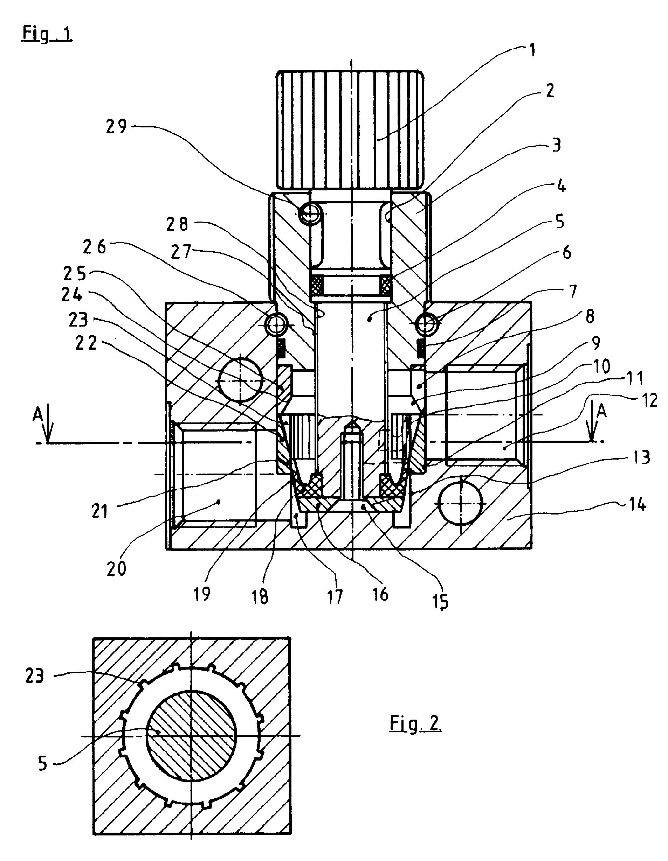

Gemäß Fig. 1 sind in einem Ventilgehäuse (14) eine abgestufte Gehäuseausnehmung (11, 13) sowie ein als Einlaß dienender Druckmitteleingang (20) und ein als Auslaß dienender Druckmittelausgang (12) vorgesehen. Der Druckmitteleingang (20) und der Druckmittelaus gang (12) sind im wesentlichen quer zur Längsachse der Gehäuseausnehmung (11, 13) verlaufend, gegeneinander versetzt angeordnet und stehen mit der Gehäuseausnehmung (11, 13) in Verbindung.

In der Gehäuseausnehmung (11, 13) ist ein erster zylindrisch ausgebildeter ringförmiger Körper (22) angeordnet, der sich auf einem durch die Abstufung der Gehäuseausnehmung (11, 13) gebildeten Absatz des Ventilgehäuses (14) abstützt.

In die den freien Innenraum des ersten ringförmigen Körpers (22) begrenzende Wand sind Schlitze (23) eingearbeitet, die im wesentlichen in Richtung der Längsachse des ersten ringförmigen Körpers (22) verlaufen. die Schlitze (23) sind so ausgebildet und so angeordnet, daß ihre Tiefe, ausgehend von dem sich auf dem Absatz der Gehäuseausnehmung (11, 13) abstützenden Endbereich des ersten ringförmigen Körpers (22) in Richtung auf dessen diesem Endbereich abgewandte Stirnseite zu zunimmt. Die als Durchlaßöffnung ausgebildeten Schlitze (23) haben die Funktion eines Bypass-Strömungskanals.

Auf dem ersten ringförmigen Körper (22) liegt ein ebenfalls in der Gehäuseausnehmung (11, 13) angeordneter zweiter ringförmiger Körper (25) auf, dessen dem ersten ringförmigen Körper (22) zugewandte Seite eine von der inneren Mantelfläche zur äußeren Mantelfläche des zweiten ringförmigen Körpers (25) hin verlaufende Abschrägung (24) aufweist. Die so gebildete schmale Ringfläche des zweiten ringförmigen Körpers (25) hat im wesentlichen den gleichen Querschnitt wie die mit dieser Ringfläche in Berührung stehende Ringfläche des ersten ringförmigen Körpers (22), gemessen von der tiefsten Stelle der Schlitze (23) (Nutgrund) bis zur äußeren Mantelfläche des ersten ringförmigen Körpers (22).

Die Gehäuseausnehmung (11, 13) wird von einem Deckel (3) verschlossen, der sich zum Teil in die Gehäuseausnehmung (11, 13) hineinerstreckt und auf der dem ersten ringförmigen Körper (22) abgewandten Stirnseite des zweiten ringförmigen Körpers (25) aufsitzt.

Mittels beispielsweise als Schrauben ausgebildeten Sicherungselementen (6, 26) wird der Deckel (3) am Ventilgehäuse (14) gehalten. Ein in einer Umfangsnut des Deckels (3) angeordneter Dichtring (7) liegt dichtend an der die Gehäuseausnehmung (11, 13) begrenzten Wand an.

Im Deckel (3) ist eine in Richtung der Längsachse des Deckels (3) verlaufende Bohrung (2) vorgesehen, die koaxial zu den beiden ringförmigen Körpern (22 und 25) angeordnet ist. Die Bohrung (2) ist in dem Bereich des Deckels (3), welcher innerhalb des Ventilgehäuses (14) gelegen ist, mit Gewinde (28) versehen. Die Bohrung (2) dient als Führung für ein Stellglied (5), welches auf einem Teil seiner axialen Erstreckung mit Gewinde (27) versehen ist.

Das Stellglied (5) ist in seiner Länge so bemessen, daß es sich durch den gesamten Deckel (3) sowie durch den freien Innenraum der beiden ringförmigen Körper (22 und 25) hindurch bis dicht an den die Gehäuseausnehmung (11, 13) begrenzenden Boden heran erstreckt.

An dem Ende des Stellgliedes (5), welches dem Boden der Gehäuseausnehmung (11, 13) zugewandt ist, ist ein das Stellglied (5) umschließendes ringförmiges Dichtelement (18, 19) angeordnet, welches eine sich nach außen erstreckende umlaufende elastische Dichtlippe (19) aufweist. Das Dichtelement (18, 19) ist auf eine Abstufung des Endstückes des Stellgliedes (5) aufgeschoben und wird durch einen tellerartigen Anschlag (16), der mittels einer Schraube (15) an der Stirnseite des Stellgliedes (5) befestigt ist, auf dem Stellglied (5) gehalten.

Die umlaufende Dichtlippe (19) des Dichtelementes (18, 19) liegt unter Vorspannung dichtend an einer Dichtfläche des ersten ringförmigen Körpers (22) an.

Die Dichtfläche des ersten ringförmigen Körpers (22) wird von der das Dichtelement (18, 19) und das Stellglied (5) ringartig umgebenden inneren Mantelfläche des ersten ringförmigen Körpers (22) gebildet und ist unterteilt in einen geschlossenen ersten Abschnitt (21) und einen daran anschließenden, von den Schlitzen (23) unterbrochenen zweiten Abschnitt, in welchem die Dichtlippe (19) des Dichtelementes (18, 19) lediglich an im wesentlichen parallel zur Längsachse des Stellgliedes (5) verlaufenden, die Schlitze (23) begrenzenden Stegen (10) anliegt.

Das Dichtelement (18, 19) und die Dichtfläche (21) bilden ein Rückschlagventil (18, 19, 21), welches den von den beiden ringförmigen Körpern (22 und 25) in der Gehäuseausnehmung (11, 13) begrenzten Raum in eine Druckmitteleingangskammer (17) und eine Druckmittelausgangskammer (9) unterteilt, wobei die Druckmitteleingangskammer (17) mit dem Druckmitteleingang (20) und die Druckmittelausgangskammer (9) ber einen Durchlaß (8) in der Wand des zweiten ringförmigen Körpers (25) mit dem Druckmittelausgang (12) verbunden ist.

Der im Deckel (3) geführte, nicht mit Gewinde versehene Teil des Stellgliedes (5) weist einen in einer Umfangsnut angeordneten Dichtring (4) auf, der dichtend an die die Bohrung (2) im Deckel (3) begrenzenden Wand anliegt. Zwischen der dem Gewinde (27) abgewandten Seite des Dichtringes (4) und dem aus der Bohrung (2) im Deckel (3) herausgeführten Endbereich des Stellgliedes (5) besitzt das Stellglied (5) eine Einschnürung. Ein im Bereich der Einschnürung an der Wand der Bohrung (2) angeordnetes stiftartiges Sicherungselement (29) begrenzt die Bewegung des Stellgliedes (5) in Richtung seiner Längsachse.

Auf dem aus dem Deckel (3) herausgeführten Ende des Stellgliedes (5) ist ein knopfartiges Betätigungselement (1) für das Stellglied (5) angeordnet.

Das Dichtelement (18, 19) bildet im Bereich der Schlitze (23) zusammen mit den die Schlitze (23) begrenzenden Stegen (10) eine einstellbare Drossel, die bedingt durch die Rückschlagwirkung des Rückschlagventils (18, 19, 21) nur in Richtung von der Druckmittelausgangskammer (9) zur Druckmitteleingangskammer (17) hin wirksam wird. Die Drossel entspricht dem vorstehend erwähnten Bypass-Strömungskanal.

Der maximale Durchlaßquerschnitt des Drosselrückschlagventils (18, 19, 10, 23, 21) in Strömungsrichtung, d.h. vom Einlaß (Druckmitteleingeng 20) zum Auslaß (Druckmittelausgang 12) hin wird bestimmt durch den Längsspalt zwischen dem nicht mit Schlitzen versehenen Bereich (21) der Dichtfläche des ersten ringförmigen Körpers (22) und der äußeren Mantelfläche des Teiles (18) des Dichtelementes (18, 19).

Das Teil (18) des Dichtelementes (18, 19) besteht in diesem Ausführungsbeispiel aus demselben Material wie die umlaufende Dichtlippe (19). Es kann jedoch auch als Träger für die umlaufende Dichtlippe (19) aus einem andersartigen Material, wie z.B. Kunststoff oder Metall bestehen.

In Fig. 2 ist eine Ansicht des Drosselrückschlagventils gemäß dem Schnitt A-A nach Fig. 1 dargestellt. Der besseren Übersicht halber sind die den in Fig. 1 gezeigten Bauteilen gleichen Bauteile mit gleichen Bezugsziffern versehen.

In einem Ausschnitt des Ventilgehäuses (14) ist der Teil (11) der Gehäuseausnehmung (11, 13) zu erkennen, in welchem der erste ringförmige Körper (22) angeordnet ist. Der ringförmige Körper (22) umgibt in einem vorbestimmten Abstand das das Dichtelement (18, 19) tragende Stellglied (5). Der einerseits von der äußeren Mantelfläche des Stellgliedes (5) und andererseits von der inneren Mantelfläche des ersten ringförmigen Körpers (22) begrenzte Ringraum stellt die Druckmitteleingangskammer (9, 17) dar, über welche der Einlaß mit dem Auslaß verbindbar ist und in welcher das Rückschlagventil angeordnet ist.

Die innere Mantelfläche des ersten ringförmigen Körpers (22) weist in etwa in Längsrichtung des ersten ringförmigen Körpers (22) verlaufende Schlitze (23) auf, die von den Stegen (10) begrenzt werden. Die Stege (10) schließen an den nicht mit Schlitzen (23) versehenen eine umlaufende Fläche aufweisenden unteren Teil (21) der inneren Mantelfläche des ersten ringförmigen Körpers (22) an und verlaufen parallel zur Längsachse des ringförmigen Körpers (22), so daß die umlaufende Dichtlippe (19) des Dichtelementes (18, 19) sich bei einer Verstellbewegung des Stellgliedes (5) in Richtung seiner Längsachse stets an einer zylindrischen Dichtfläche dichtend anliegt, wobei die zylindrische Dichtfläche oberhalb des Teiles (21) des ersten ringförmigen Körpers (22), d.h., in Richtung auf die den Druckmittelausgang (12) zu, durch die sich vertiefenden Schlitze (23) unterbrochen wird.

Die Schlitze können abweichend von der in den Figuren 1 und 2 gezeigten Form jede beliebige andere Form aufweisen. Anstelle sich in Richtung auf den Druckmittelausgang (12) zu zunehmend vertiefend können sie z.B. auch von sich auf dem Umfang der inneren Mantelfläche des ersten ringförmigen Körpers (22) erweiternden Vertiefungen gebildet werden, die von entsprechenden Erhöhungen begrenzt werden.

Die Funktion des im Vorstehenden beschriebenen Drosselrückschlagventils wird nachfolgend näher erläutert.

In der in Fig. 1 gezeigten Stellung des Stellgliedes (5) liegt die umlaufende Dichtlippe (19) des Dichtelementes (18, 19) an dem Teil (21) der Dichtfläche des ersten ringförmigen Körpers (22) dichtend an. Dieser Teil (21) der Dichtfläche weist keine Schlitze auf.

Wird über den Druckmitteleingang (20) Druckmittel in die Druckmitteleingangskammer (17) eingesteuert, so wird von dem sich in der Druckmitteleingangskammer (17) aufbauenden Druck die Dichtlippe (19) des Dichtelementes (18, 19) im wesentlichen in radialer Richtung auf das Stellglied (5) zu elastisch verformt und so der maximale ringförmige Durchlaßquerschnitt des Drosselrückschlagventils (18, 19, 21) freigegeben (Ringspalt zwischen der Dichtfläche des Teiles (21) des ersten ringförmigen Körpers (22) und äußerer Mantelfläche des Dichtelementes (18, 19).

Von der Druckmitteleingangskammer (17) strömt das Druckmittel in die Druckmittelausgangskammer (9) und von dieser weiter durch den Druckmittelausgang (12) zu einem Verbraucher, wie z.B. einem Druckmittel-Vorratsbehälter hin.

Wird die Druckmittelzufuhr zur Druckmitteleingangskammer (17) unterbrochen, so daß von der Druckmittelausgangskammer (9) zur Druckmitteleingangskammer (17) hin ein Druckgefälle entsteht, kommt die Dichtlippe (19) des Dichtelementes (18, 19) an der Dichtfläche des Teiles (21) des ersten ringförmigen Körpers (22) zur Anlage. Die Verbindung zwischen der Druckmittelausgangskammer (9) und der Druckmitteleingangskammer (17) ist jetzt unterbrochen, so daß das Druckmittel im Verbraucher nicht über daß sich in der Schließstellung befindliche Rückschlagventil (18, 19, 21) abströmen kann.

Wird gewünscht, daß nach der Einsteuerung von Druckmittel in einen Verbraucher der Druck im Verbraucher gedrosselt abgesenkt wird, so wird durch Drehen des Stellgliedes (5) eine Verschiebebewegung des Dichtelementes (18, 19) in Richtung der Längsachse des Stellgliedes (5) bewirkt. Die Dichtlippe (19) des Dichtelementes (18, 19) löst sich dabei von der geschlossenen ringförmigen Dichtfläche des Teiles (21) des ersten ringförmigen Körpers (22) und kommt an der von den Stegen (10) gebildeten und von den Schlitzen (23) unterbrochenen Dichtfläche des ersten ringförmigen Körpers (22) zur Anlage (siehe gestrichelt dargestelltes Dichtelement in Fig. 1).

In der Druckmitteleinsteuerphase wird die Dichtlippe (19) durch das Druckmittel von der Dichtfläche (Stege 10) abgehoben, so daß der maximale Durchlaßquerschnitt des Drosselrückschlagventils (18, 19, 21, 23, 10) offen ist. Das Druckmittel kann ungehindert von der Druckmitteleingangskammer (17) in die Druckmittelausgangskammer (9) und weiter zum Verbraucher gelangen.

Wird die Druckmittelzufuhr zur Druckmitteleingangskammer (17) unterbrochen, legt die Dichtlippe (19) sich an die Dichtfläche (Stege 10) an. Durch die Schlitze (23) kann das Druckmittel aus der Druckmittelausgangskammer (9) und somit auch aus dem Verbraucher über die in ihrem Querschnitt verringerte Durchlaßöffnung (Schlitze 23) gedrosselt zur Druckmitteleingangskammer (17) und weiter zum Druckmitteleingang (20)

EP 0 358 899 B1

abströmen.

Da die Schlitze (23) in Richtung auf den Auslaß (Druckmittelausgang 12) zu einen sich erweiternden Querschnitt und somit in Richtung auf den Einlaß (Druckmittelausgang 20) zu einem sich verringernden Querschnitt aufweisen, ist der Drosselquerschnitt in Abhängigkeit von der Stellung des Dichtelementes (18, 19) veränderbar.

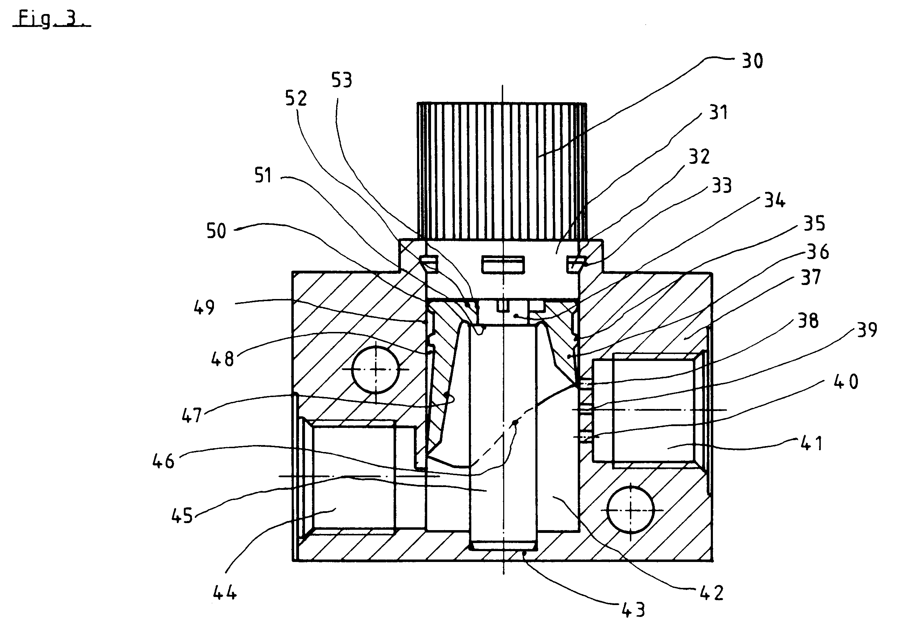

Fig. 3 zeigt ein Drosselrückschlagventil mit einem topfförmig ausgebildeten Dichtelement.

In einem Gehäuse (37) ist eine Gehäuseausnehmung (49, 42) vorgesehen, die mit einem als Druckmitteleingang dienenden Einlaß (41) und einem als Druckmittelausgang dienenden Auslaß (44) verbunden ist. Der Einlaß (41) und der Auslaß (44) sind in Richtung der Längsachse der Gehäuseausnehmung (49) gegeneinander versetzt angeordnet. Der Einlaß (41) steht über Durchlaßöffnungen (38, 39, 40), die im Bereich des Einlasses (41) in der die Gehäuseausnehmung (49) begrenzenden Wand vorgesehen sind, mit der als Druckmittelkammer dienenden Gehäuseausnehmung (49, 42) in Verbindung.

Die Gehäuseausnehmung (49, 42) ist mittels eines Deckels (31), der in die eine Stirnseite der Gehäuseausnehmung (49, 42) eingeschoben ist, verschlossen. Mittels an der äußeren Mantelfläche des Deckels (31) angeordneten sich im wesentlichen radial nach außen erstreckenden Vorsprüngen (32), die in eine in der die Gehäuseausnehmung (49, 42) begrenzenden Wand eingearbeitete Nut (33) eingreifen, wird der Deckel (31) in der Gehäuseausnehmung (49) gehalten.

Der Deckel (31) weist einen zentrisch angeordneten Durchlaß auf, durch welchen das eine Endstück (34) eines koaxial in der Gehäuseausnehmung (49, 42) angeordneten Stellgliedes (45, 34) aus dem Ventilgehäuse (37) herausgeführt ist. Das andere Endstück des Stellgliedes (45, 34) ist in einer Ausnehmung (43) im Boden des Ventilgehäuses gelagert. Auf dem aus dem Ventilgehäuse (37) herausgeführten Endstück (34) ist ein zur Betätigung des Stellgliedes (45, 34) dienender Drehknopf (30) befestigt.

Auf das einen geringeren Querschnitt aufweisende Endstück (34) des Stellgliedes (45, 34), welches sich bis in die Gehäuseausnehmung (49) hineinerstreckt, ist ein topfförmiges Dichtelement (36) aus einem elastischen Werkstoff aufgeschoben. Das Endstück (34) des Stellgliedes (45, 34) und eine im Boden (52) des topfförmiges Dichtelementes (36) angeordnete Öffnung (53) für das Endstück (34) sind so bemessen und so ausgebildet, daß eine Relativbewegung zwischen dem Stellglied (45, 34) und dem topfförmigen Dichtelement (36) verhindert wird. Das topfförmigen Dichtelement (36) weist auf seinem Umfang zwei wulstartige umlaufende Vorsprünge (50 und 35) auf, die an der die Gehäuseausnehmung (49, 42) begrenzenden Wand anliegen. Vom Boden (52) des topfförmigen Dichtelementes (36) ausgehend weist dieses in Richtung auf seinen freien Endbereich zu eine sich konisch nach außen erweiterte Form auf, so daß lediglich der freie Endbereich des topfförmigen Dichtelementes (36) mit seiner Mantelfläche an der die Gehäuseausnehmung (49, 42) begrenzenden Wand des Ventilgehäuses (37) anliegt.

Das topfförmige Dichtelement (36) weist eine von seinem Boden (52) ausgehend sich bis zu seinem freien Endbereich hin erstreckende, nach Art eines Ausschnittes ausgebildete Ausnehmung (47) auf, durch welche eine leichtere elastische Verformbarkeit des topfförmigen Dichtelementes (36) erzielt wird. Aufgrund der umlaufenden wulstartigen Vorsprünge (50, 35) und aufgrund des an der die Gehäuseausnehmung (49, 42) begrenzenden Wand anliegenden nur geringen Teiles der Mantelfläche des topfförmigen Dichtelementes (36) wird bei einer Verdrehbewegung (Rotation) des topfförmigen Dichtelementes (36) eine erhebliche Reduzierung der Reibkräfte zwischen der die Gehäuseausnehmung (49) begrenzenden Wand und der Mantelfläche des topfförmigen Dichtelementes (36) erzielt.

Der dem Boden (52) abgewandte Rand (46) des topfförmigen Dichtelementes (36) verläuft nicht parallel zum Boden (52) des topfförmigen Dichtelementes (36) sondern er verläuft, ausgehend von dem den Boden (52) entferntest liegenden Punkt des freien Endes des topfförmigen Dichtelementes (36), schräg in Richtung auf den Boden (52) zu. Der schräg ausgebildete Teil des Randes (46) ist so ausgelegt und die maximale Länge in axialer Richtung des topfförmigen Dichtelementes (36) ist so bemessen, daß der gesamte Durchlaßquerschnitt des als in ihrem Durchlaßquerschnitt veränderbare Durchlaßöffnung ausgebildeten Einlasses (41) von diesem Teil der Mantelfläche des topfförmigen Dichtelementes (36) verschließbar ist.

Der die geringere axiale Erstreckung aufweisende Teil der Mantelfläche des topfförmigen Dichtelementes (36) ist so bemessen und so ausgebildet, daß der gesamte Durchlaßquerschnitt (Durchlaßöffnungen 38, 39, 40) am Einlaß (41) in dieser Stellung des Dichtelementes (36) freigegeben ist.

Dadurch, daß das freie Ende des topfförmigen Dichtelementes (36) praktisch die Form eines schräg abgeschnittenen Rohres aufweist (Ellypse), läßt sich der Durchlaßquerschnitt des Einlasses (41) durch Verdrehen des Dichtelementes (36) mittels des Stellgliedes (45, 34) stufenlos verändern. Die maximale Länge des topfförmigen Dichtelementes (36) soll so bemessen sein, daß der Durchlaßquerschnitt des Auslasses (44) nicht verringert wird, unabhängig davon, in welcher Stellung sich das Dichtelement (36) befindet.

Das Dichtelement (36) muß nicht zwangsläufig topfförmig ausgebildet sein. Es kann auch aus einem plattenartigen Teil aus einem elastischen Werkstoff bestehen, welches der Form der die Gehäuseausnehmung (49) begrenzenden Wand angepaßt ist und dessen freies Ende eine Schräge aufweist.

Das Dichtelement (36, 46) und die im Bereich des Einlasses (41) als Dichtfläche ausgebildete, die Gehäuseausnehmung (49, 42) begrenzende Wand, bilden ein Drosselrückschlagventil (49, 36, 46) mit veränderbarem Drosselquerschnitt.

Die Funktion des im Vorstehenden beschriebenen Drosselrückschlagventils wird nachfolgend näher erläutert.

In der Abbildung befindet sich das Dichtelement (36) in einer Stellung, in welcher der gesamte Durchlaßquerschnitt des mit dem Einlaß (41) verbundenen Durchlasses (38, 39, 40) freigegeben ist. Vom Einlaß (41) strömt das Druckmittel direkt durch die Druckmittelkammer (49, 42) zum Auslaß (44) und von diesem weiter zum Verbraucher.

Wird die Druckmittelzufuhr zum Einlaß (41) unterbrochen, so strömt das Druckmittel vom Verbraucher durch den Auslaß (44) und die Druckmittelkammer (49, 42) zurück zum Einlaß (41) und gelangt ungedrosselt durch diesen in die angeschlossene Druckmittelleitung.

Wird ein gedrosseltes Rückströmen des Druckmittels gewünscht, so wird durch Drehen des Stellgliedes (45, 34) mittels des Drehknopfes (30) das Dichtelement (36) um seine Längsachse verdreht. Der eine längere axiale Erstreckung aufweisende Bereich des Dichtelementes (36) kommt dabei an der im Bereich des Einlasses (41) gelegenen Dichtfläche zur Anlage und deckt je nach Stellung des Dichtelementes (36) einen mehr oder weniger großen Teil des Durchlaßquerschnittes (Durchlaßöffnungen 38 und 39 z.B.) ab.

Wird der Einlaß (41) mit Druckmittel beaufschlagt, so gelangt dieses in den Teil (48) der Druckmittelkammer (48, 42) und gleichzeitig über den nicht abgedeckten Teil der mit dem Einlaß (41) verbundenen Durchlaßöffnungen (z.B. Durchlaß 40) direkt in den Teil (42) der Druckmittelkammer (42, 48). Der sich in der Druckmittelkammer (42, 48) aufbauende Druck bewirkt eine elastische Verformung des Dichtelementes (36) im wesentlichen radial nach innen in Richtung auf das Stellglied (45, 34) zu. Dabei löst sich das Dichtelement (36) mit seinem freien Endbereich von der als Dichtfläche ausgebildeten, die Gehäuseausnehmung (49) begrenzenden Wand. Das Druckmittel strömt jetzt ungedrosselt von der Druckmittelkammer (42, 48) durch das vollständig geöffnete Drosselrückschlagventil (36, 49) zum Auslaß (44) und weiter zum Verbraucher hin.

Wird die Druckmittelzufuhr zum Einlaß (41) unterbrochen, so ist das Druckmittel im Verbraucher und somit auch in dem Teil (42) der Druckmittelkammer (42, 48) bestrebt, zum Teil (48) der Druckmittelkammer (48, 42) und somit auch zum Einlaß (41) hin zurückzuströmen.

Aufgrund des nach der Unterbrechung der Druckmittelzufuhr zum Einlaß (41) auftretenden Druckgefälles vom Auslaß (44) zum Einlaß (41) hin nimmt das topfförmige Dichtelement (36) aufgrund seiner Elastizität seine ursprüngliche Form wieder an und kommt mit seiner Mantelfläche an der Dichtfläche der Gehäuseausnehmung (49) dichtend zur Anlage.

Das Druckmittel in der Druckmittelkammer (42, 48) und somit auch im Verbraucher kann jetzt nur noch gedrosselt durch einen Teilbereich des Durchlaßquerschnittes des Einlasses (41) (Durchlaß 40) in die an diesen anschließende Druckmittelleitung entweichen.

### Patentansprüche

1. Drosselrückschlagventil mit folgenden Merkmalen:
a) Zwischen einem Einlaß (20) und einem Auslaß (12) ist ein in Strömungsrichtung vom Einlaß (20) zum Auslaß (12) hin in die Offenstellung bringbares Rückschlagventil (18, 19, 21, 10) angeordnet;
b) das Rückschlagventil (18, 19, 21, 10) ist nach Art eines Lippenventils mit einem lippenartigen Dichtelement (19) ausgebildet;
c) es ist ein Bypass-Strömungskanal mit veränderbarem Querschnitt vorgesehen, der von wenigstens einer zwischen dem Einlaß (20) und dem Auslaß (12) angeordneten Durchlaßöffnung (23) gebildet wird; gekennzeichnet durch die folgenden Merkmale:
d) der Querschnitt dieser Durchlaßöffnung (23) ist wenigstens zum Teil von dem Dichtelement (19) abdeckbar;
e) das Dichtelement (19) ist mittels eines Stellgliedes (5) relativ zu dieser Durchlaßöffnung (23) bewegbar, derart, daß bei einer Bewegung des Dichtelementes (19) der vom Dichtelement (19) überdeckte Querschnitt dieser Durchlaßöffnung (23) veränderbar ist.

2. Drosselrückschlagventil nach Anspruch 1, gekennzeichnet durch die folgenden Merkmale:
a) Das Rückschlagventil wird von dem an dem Stellglied (5) angeordneten Dichtelement (18, 19), welches sich im wesentlichen quer zur Längsachse des Stellgliedes (5) verlaufend vom Stellglied (5) weg erstreckt und einer Dichtfläche (21, 10) gebildet, die an einer wenigstens einen Teil des Stellgliedes (5) und das Dichtelement (18, 19) aufnehmenden Gehäuseausnehmung (11, 13) begrenzenden Wand eines Ventilgehäuses (14) vorgesehen ist;

b) die Dichtfläche ist im Bereich des Einlasses (20) vorgesehen;

c) im Bereich der Dichtfläche (21, 10) ist in der Wand wenigstens eine Vertiefung angeordnet, welche im Zusammenwirken mit dem Dichtelement (18, 19) die Durchlaßöffnung (23) bildet;

d) die Vertiefung ist so ausgebildet und so angeordnet, daß sich ihr Querschnitt in Richtung auf den Einlaß (20) zu verringert;

e) die Vertiefung und das mit dem Stellglied (5) verbundene Dichtelement (18, 19) bilden die einstellbare Drossel, mittels welcher bei einer Veränderung der Stellung des Dichtelementes (18, 19) in axialer Richtung der Querschnitt der Durchlaßöffnung (23) in Rückströmrichtung des Druckmittels veränderbar ist;

3. Drosselrückschlagventil nach wenigstens einem der vorhergehenden Ansprüche, dadurch gekennzeichnet, daß die Dichtfläche (21, 10) und die Vertiefung so bemessen und so angeordnet sind, daß der Einlaß (20) mittels des Dichtelementes (18, 19) in Rückströmrichtung (17) absperrbar ist.

4. Drosselrückschlagventil nach wenigstens einem der vorhergehenden Ansprüche, dadurch gekennzeichnet, daß in der Wand mehrere Vertiefungen vorgesehen sind.

5. Drosselrückschlagventil nach wenigstens einem der vorhergehenden Ansprüche, dadurch gekennzeichnet, daß das Dichtelement (18, 19) aus einem am Stellglied (5) angeordneten ringförmigen Trägerkörper (18) und einer an diesem angeordneten umlaufenden Dichtlippe (19) besteht, welche dichtend an der Dichtfläche (21, 10) anliegt.

6. Drosselrückschlagventil nach wenigstens einem der vorhergehenden Ansprüche, gekennzeichnet durch die folgenden Merkmale:

a) Die Dichtfläche (21, 10) wird von der dem Dichtelement (18, 19) zugewandten inneren Mantelfläche eines ersten ringförmigen Körpers (22) gebildet, welcher das Dichtelement (18, 19) und wenigstens einen Teil des Stellgliedes (5) umgebend in der Gehäuseausnehmung (11, 13) des Ventilgehäuses (14) angeordnet ist;

b) die Vertiefung ist in der dem Dichtelement (18, 19) und dem Stellglied (5) zugewandten inneren Mantelfläche des ersten ringförmigen Körpers (22) angeordnet.

7. Drosselrückschlagventil nach wenigstens einem der vorhergehenden Ansprüche, gekennzeichnet durch die folgenden Merkmale:

a) Die Vertiefung wird von einem Schlitz gebildet, welcher in der dem Dichtelement (18, 19) und dem Stellglied (5) zugewandten inneren Mantelfläche des ersten ringförmigen Körpers (22) angeordnet ist;

b) die in der inneren Mantelfläche des ersten ringförmigen Körpers (22) angeordnete Vertiefung weist auf ihrer sich auf den Einlaß (20) zu erstreckenden Seite eine geringere Tiefe auf als auf ihrer sich auf den Auslaß (12) zu erstreckenden Seite.

8. Drosselrückschlagventil nach Anspruch 1, gekennzeichnet durch die folgenden Merkmale:

a) Das Dichtelement (36, 53) ist als ein topfförmig ausgebildetes Teil (36, 53) ausgebildet, welches in einer Gehäuseausnehmung (49) derart angeordnet ist, daß die offene Seite des topfförmigen Teiles (36) einer Druckmittelkammer (42) zugewandt ist, welche den mit dem Einlaß (41) verbundenen Durchlaß (38, 39, 40) mit dem Auslaß (44) verbindet;

b) das topfförmig ausgebildete Teil (36, 53) bildet mit wenigstens einem Teil seiner äußeren Mantelfläche und dem Durchlaß (38, 39, 40) das Ventil;

c) der die offene Seite des topfförmig ausgebildeten Dichtelementes (36, 53) begrenzende Rand (46) verläuft von seinem dem Boden (53) des topfförmig ausgebildeten Dichtelementes (36, 53) entferntest liegenden Punkt ausgehend schräg in Richtung auf den Boden (53) des topfförmig ausgebildeten Dichtelementes (36, 53) zu;

d) das topfförmig ausgebildete Dichtelement (36, 53) ist um seine Längsachse drehbar mit dem Stellglied (34, 45) verbunden, derart, daß je nach der vom Dichtelement (36, 53) eingenommenen Stellung ein die größere Seitenlänge oder ein die kleinere Seitenlänge aufweisender Teil der Mantelfläche des topfförmig ausgebildeten Dichtelementes (36, 53) an der Dichtfläche im Bereich des Durchlasses (38, 39, 40) anliegt und so der Durchlaßquerschnitt des Durchlasses (38, 39, 40) verändert wird.

9. Drosselrückschlagventil nach wenigstens einem der vorhergehenden Ansprüche, gekennzeichnet durch die folgenden Merkmale:

a) Die Dichtfläche (21, 10) ist an der inneren Mantelfläche eines in der Gehäuseausnehmung angeordneten ringförmigen Körpers (22) vorgesehen;

b) der sich in Richtung auf den Einlaß (20) zu erstreckende Endbereich der inneren Mantelfläche des ringförmigen Körpers (22) ist als eine umlaufende Fläche (21) ausgebildet;

c) der an diese Fläche (21) anschließende, sich in Richtung auf den Auslaß (12) zu erstreckende Teil der inneren Mantelfläche des ringförmigen Körpers (22) weist die Vertiefungen begrenzende Stege (10) auf, die in Richtung der Längsachse des ringförmigen Körpers (22) verlaufen und deren dem Dichtelement (18,

EP 0 358 899 B1

19) zugewandte Stirnfläche eine durch die Vertiefungen unterbrochene Dichtfläche bilden.

10. Drosselrückschlagventil nach wenigstens einem der vorhergehenden Ansprüche, <u>dadurch gekenn-</u><u>zeichnet,</u> daß das topfförmig ausgebildete Dichtelement (36, 53) sich von seiner offenen Seite ausgehend zu seinem Boden (53) hin kegelförmig verjüngt.

11. Drosselrückschlagventil nach wenigstens einem der vorhergehenden Ansprüche, <u>dadurch gekenn-</u><u>zeichnet,</u> daß das topfförmig ausgebildete Dichtelement (36, 53) wenigstens eine in Umfangsrichtung verlaufende Erhöhung (35) aufweist, welche an der die Gehäuseausnehmung (49) begrenzenden Wand anliegt, wobei diese umlaufende Erhöhung (35) außerhalb des Bereiches des Einlasses (41) und des Auslasses (44) gelegen ist.

## Claims

1. Throttle non-return valve with the following features:

a) Disposed between an inlet (20) and an outlet (12) is a non-return valve (18, 19, 21, 10) able to be brought into the open position in the flow direction from the inlet (20) to the outlet (12);

b) the non-return valve (18, 19, 21, 10) is constructed in the manner of a lip valve with a lip-type sealing member (19);

c) a by-pass flow channel with a variable cross-section is provided, which is formed by at least one discharge opening (23) located between the inlet (20) and the outlet (12), characterised by the following features:

d) the cross-section of this discharge opening (23) can be covered at least partly by the sealing member (19);

e) the sealing member (19) can be moved by means of a control member (5) relative to this discharge opening (23) so that at the time of a movement of the sealing member (19), the cross-section of this discharge opening (23) covered by the sealing member (19) is variable.

2. Throttle non-return valve according to Claim 1, characterised by the following features:

a) The non-return valve is formed by the sealing member (18, 19) disposed on the control member (5), which sealing member extends substantially at right angles to the longitudinal axis of the control member (5) away from the control member (5) and by a sealing surface (21, 10), which is provided on a wall of a valve housing (14) defining a housing recess (11, 13) receiving at least part of the control member (5) and the sealing member (18, 19);

b) the sealing surface is provided in the region of the inlet (20);

c) disposed in the region of the sealing surface (21, 10), in the wall, is at least one recess, which in cooperation with the sealing member (18, 19) forms the discharge opening (23);

d) the recess is constructed and arranged so that its cross-section reduces in the direction towards the inlet (20);

e) the recess and the sealing member (18, 19) connected to the control member (5) form the adjustable throttle, by means of which, in the case of a variation of the position of the sealing member (18, 19) in the axial direction, the cross-section of the discharge opening (23) in the backflow direction of the pressure medium is variable;

3. Throttle non-return valve according to at least one of the preceding Claims, characterised in that the sealing surface (21, 10) and the recess are dimensioned and arranged so that the inlet (20) can be closed off by means of the sealing member (18, 19) in the backflow direction (17).

4. Throttle non-return valve according to at least one of the preceding Claims, characterised in that several recesses are provided in the wall.

5. Throttle non-return valve according to at least one of the preceding Claims, characterised in that the sealing member (18, 19) consists of an annular support member (18) arranged on the control member (5) and of a peripheral sealing lip (19) arranged on the support member, which sealing lip bears in a sealing manner against the sealing surface (21, 10).

6. Throttle non-return valve according to at least one of the preceding Claims, characterised by the following features:

a) The sealing surface (21, 10) is formed by the inner surface of a first annular member (22) facing the sealing member (18, 19), which member (22) is arranged to surround the sealing member (18, 19) and at least one part of the control member (5), in the housing recess (11, 13) of the valve housing (14);

b) the recess is located in the inner surface of the first annular member (22) facing the sealing member (18, 19) and the control member (5).

7. Throttle non-return valve according to at least one of the preceding Claims, characterised by the following

8

features:

a) The recess is formed by a slit, which is located in the inner surface of the first annular member (22) facing the sealing member (18, 19) and the control member (5);

b) on its side extending towards the inlet (20), the recess located in the inner surface of the first annular member (22) has a shallower depth than on its side extending towards the outlet (12).

8. Throttle non-return valve according to Claim 1, characterised by the following features:

a) The sealing member (36, 53) is constructed as a cup-shaped part (36, 53), which is located in a housing recess (49) such that the open side of the cup-shaped part (36) faces a pressure medium chamber (42), which connects the passage (38, 39, 40) connected to the inlet (41), to the outlet (44);

b) the part (36, 53) having a cup-shaped construction forms the valve with at least one part of its outer surface and the passage (38, 39, 40);

c) the edge (46) defining the open side of the cup-shaped sealing member (36, 53) extends from its point located furthest from the base (53) of the cup-shaped sealing member (36, 53), obliquely in the direction of the base (53) of the cup-shaped sealing member (36, 53);

d) the cup-shaped sealing member (36, 53) is connected to the control member (34, 45) to rotate about its longitudinal axis so that according to the position adopted by the sealing member (36, 53), a part of the surface of the cup-shaped sealing member (36, 53) having the greater lateral length or a part having the smaller lateral length bears against the sealing surface in the region of the passage (38, 39, 40) and thus the passage cross-section of the passage (38, 39, 40) is varied.

9. Throttle non-return valve according to at least one of the preceding Claims, characterised by the following features:

a) The sealing surface (21, 10) is provided on the inner surface of an annular member (22) disposed in the housing recess;

b) the end region of the inner surface of the annular member (22), extending in the direction of the inlet (20) is constructed as a peripheral surface (21)

c) the part of the inner surface of the annular member (22) adjoining this surface (21) and extending in the direction of the outlet (12) comprises webs (10) defining the recesses, which webs extend in the direction of the longitudinal axis of the annular member (22) and whereof the end face facing the sealing member (18, 19) forms a sealing surface interrupted by the recesses.

10. Throttle non-return valve according to at least one of the preceding Claims, characterised in that the sealing member (36, 53) having a cup-shaped construction tapers conically starting from its open side to its base (53).

11. Throttle non-return valve according to at least one of the preceding Claims, characterised in that the sealing member (36, 53) having a cup-shaped construction comprises at least one raised portion (35) extending in the peripheral direction, which bears against the wall defining the housing recess (39) this peripheral raised portion (35) being located outside the region of the inlet (41) and the outlet (44).

**Revendications**

1. Clapet de non retour à étranglement avec les caractéristiques suivantes :

a) on implante entre une entrée (20) et une sortie (12), un clapet de non retour (18, 19, 21, 10) qu'on peut placer en position ouverte dans le sens de l'écoulement de l'entrée (20) vers la sortie (12),

b) le clapet de non retour (18, 19, 21, 10) est constitué, selon le type, d'un clapet à lèvre avec un joint à lèvre (19),

c) on prévoit un canal d'écoulement de dérivation à section modulable qui est formé par au moins un orifice de passage (23) disposé entre l'entrée (20) et la sortie (12), caractérisé en ce que

d) la section de cet orifice de passage (23) peut être recouverte au moins en partie, par le joint (19),

e) on peut déplacer le joint (19) au moyen d'un élément de réglage (5) par rapport à cet orifice de passage (23), de sorte que lors d'un déplacement du joint (19), on peut modifier la section de cet orifice de passage (23) recouverte par le joint (19).

2. Clapet de non retour à étranglement selon la revendication 1, caractérisé en ce que

a) le clapet de non retour est formé par le joint (18, 19) disposé sur l'élément de réglage (5), qui s'étend essentiellement transversalement à l'axe longitudinal de l'élément de réglage (5), en s'éloignant de l'élément de réglage (5) et par une surface d'étanchéité (21, 10), qui est prévue sur une paroi d'un boîtier de soupape (14) délimitant la cavité de boîtier (11, 13) recevant le joint (18, 19) et au moins une partie de l'élément de réglage (5),

b) on prévoit la surface d'étanchéité dans la zone de l'entrée (20),

c) on dispose dans la zone de la surface d'étanchéité (21, 10) sur la paroi au moins une échancrure, qui forme l'orifice de sortie (23) en coopération avec le joint (18, 19),

d) on constitue l'échancrure de telle façon et en position telle que sa section diminue vers l'entrée (20),

e) l'échancrure et le joint (18, 19) relié au élément de réglage (5) forment l'étranglement réglable, au moyen duquel par modification de position du joint (18, 19) en sens axial, on peut modifier la section de l'orifice de passage (23) dans le sens du reflux du fluide de pression.

3. Clapet de non retour à étranglement selon au moins l'une des revendications précédentes, caractérisé en ce que la surface d'étanchéité '21, 10) et l'échancrure, sont de taille et de dimension telles qu'on peut obturer l'entrée (20) au moyen du joint (18, 19) dans le sens du reflux (17).

4. Clapet de non retour selon au moins une des revendications précédentes, caractérisé en ce qu'on prévoit plusieurs échancrures dans la paroi.

5. Clapet de non retour à étranglement selon au moins une des revendications précédentes, caractérisé en ce que le joint (18, 19) comprend un corps support (18) de forme annulaire disposé sur l' élément de réglage (5) et d'une lèvre d'étanchéité (19) périphérique placée sur lui, qui repose hermétiquement à la surface d'étanchéité (21, 10).

6. Clapet de non retour à étranglement selon au moins une des revendications précédentes, caractérisé en ce que

a) la surface d'étanchéité (21, 10) est formée par l'enveloppe interne tournée vers le joint (18, 19) d'un premier corps annulaire (22), qui entoure le joint (18, 19) et au moins une partie de l'élément de réglage (5) dans la cavité de boîtier (11, 13) du boîtier de soupape (14),

b) on implante les échancrures dans l'enveloppe interne du premier corps (22) annulaire dirigée vers le joint (18, 19) et l'élément de réglage (5).

7. Clapet de non retour à étranglement selon au moins l'une des revendications précédentes, caractérisé en ce que :

a) l'échancrure est constituée d'une fente, qui est disposée dans l'enveloppe interne du premier corps annulaire (22) tournée vers le joint (18, 19) et l'élément de réglage (5),

b) l'échancrure disposée dans l'enveloppe interne du premier corps annulaire (22) présente sur sa face s'étendant vers l'entrée (20) une profondeur moindre que celle s'étendant du côté de' la sortie (12).

8. Clapet de non retour à étranglement selon la revendication 1, caractérisé en ce que

a) le joint (36, 53) est une pièce en forme de pot (36, 53) qui est disposée dans une cavité de boîtier (49), de sorte que la face ouverte de la pièce (36) en forme de pot, est tournée vers une chambre de fluide de pression (42) qui relie le passage (38, 39, 40) communiquant avec l'entrée (41) à la sortie (44),

b) la pièce (36, 53) en forme de pot forme le clapet avec au moins une partie de son enveloppe externe et le passage (38, 39, 40),

c) le bord (46) délimitant la face ouverte du joint (36, 53) en forme de pot s'étend du point le plus éloigné du fond (53) du joint (36, 53) en forme de pot en biais vers le fond (53) du joint (36, 53) en forme de pot,

d) le joint en forme de pot (36, 53) est solidaire de l'élément de réglage (34, 45) pouvant tourner sur son axe longitudinal, de sorte que selon la position prise par le joint (36, 53), c'est le plus grand côté latéral ou le plus petit côté latéral de l'enveloppe de joint (36, 53) en forme de pot qui repose sur la surface d'étanchéité dans la zone du passage (38, 39, 40) et ainsi on modifie la section de passage du passage (38, 39, 40).

9. Clapet de non retour à étranglement selon au moins l'une des revendications précédentes, caractérisé en ce que

a) on prévoit la surface d'étanchéité (21, 10) sur l'enveloppe interne d'un corps (22) annulaire implanté dans la cavité de boîtier,

b) le domaine terminal de l'enveloppe interne du corps (22) annulaire s'étendant vers l'entrée (20) est en forme de surface (21) périphérique,

c) en partie de l'enveloppe interne du corps (22) annulaire, se raccordant à cette surface (21) s'étendant vers la sortie (12), présente des nervures (10) délimitant les échancrures qui s'étendent dans le sens de l'axe longitudinal du corps annulaire (22) et sa surface frontale tournée vers le joint (18, 19) forme une surface d'étanchéité interrompue par les échancrures.

10. Clapet de non retour à étranglement selon au moins l'une des revendications précédentes, caractérisé en ce que le joint en forme de pot (36, 53) se rétrécit coniquement en partant de sa face ouverte et en allant vers sont fond (53).

11. Clapet de non retour à étranglement selon au moins l'une des revendications précédentes, caractérisé en ce que le joint (36, 53) en forme de pot présente au moins un bourrelet (35) périphérique, qui repose sur la paroi délimitant la cavité de boîtier (49), ce bourrelet périphérique (35) étant situé en dehors de la zone l'entrée (41) et de la sortie (44).

Fig. 1

Fig. 2

Fig. 3.

EP 0 358 899 B1